# EUROPEAN PATENT APPLICATION

(11) **EP 0 630 164 A2**
(43) Date of publication of application: **21.12.1994**
(21) Application number: 94103355.7
(22) Date of filing: 05.03.1994
(51) Int. Cl.: H04Q 7/04, H04L 12/28, H04L 12/56

(54) **Improvements in or relating to cellular mobile radio systems**

(30) Priority: 16.06.1993 GB 9312452; 29.06.1993 GB 9313345
(71) Applicant: ROKE MANOR RESEARCH LIMITED, Romsey, Hampshire, SO51 0ZN (GB)
(72) Inventor: DeVile, Jonathan Mark, Bournemouth, Dorsert BH1 4DR (GB)
(74) Representative: Allen, Derek

(57) **Abstract**

A cellular mobile radio system which is arrange to operate in accordance with a packet reservation multiple access protocol, wherein at least one time slot in each frame, referred to as an R-slot, is designated for the transmission of access contention data, which time slot includes a field reserved for data specifying a number of information slots referred to as I-slots required by a mobile unit, and which system includes a base station adapted for operation such that consequent upon receipt of data in the said reserved field, the base station is arranged to respond by the transmission of acknowledgement data in slots referred to as A-slots which data serves to facilitate the allocation of available slots so as to satisfy the requirement of the mobile unit, characterised in that the position of the R-slots is arranged to be the same in several successive frames.

## Description

This invention relates to cellular mobile radio systems, which include a package reservation multiple access (PRMA) protocol.

More especially it relates to an improvement in or modification of the invention which forms the subject of our co-pending GB Patent Application No. 9219824.1 to which attention is hereby directed.

According to the invention which forms the subject of our co-pending patent application as aforesaid, a cellular mobile radio system is provided which is arranged to operate in accordance with a package reservation multiple access protocol, wherein at least one time slot in each frame, referred to as an R-slot, is designated for the transmission of access contention data, which time slot includes a field reserved for data specifying a number of information slots, referred to as I-slots required by a mobile unit, and which system includes a base station adapted for operation such that consequent upon receipt of data in the said reserved field, the base station is arranged to respond by the transmission of acknowledgement data in slots referred to as A-slots, which data serves to facilitate the allocation of available slots, so as to satisfy the requirement of the mobile unit.

Since in this system the base station has a comprehensive knowledge of the current availability of information carrying slots, available slots can be allocated on the down-link (base to mobile) in response to slot requests in the field reserved for such requests, which requests are transmitted by the mobile unit IN the up-link (mobile to base). As will be well appreciated by those skilled in the art, since only one access contention request is required irrespective of the number of information slots required, the access contention time required to reserve capacity will be minimised OR at least substantially reduced as compared with a system in which individual slots must be contended for.

In known PRMA protocols of the kind mentioned in our co-pending patent application as just before referred to, the R-slots/frame are changed depending on the traffic load experienced, and so mobiles must be informed by the base station of the latest number and position of the R-slots and A-slots as these are changing on a frame to frame basis. In order to provide data appertaining to the number and position of the R-slots and A-slots, a feedback channel from the base station, broadcasting to all mobiles in a cell is required. However, in practical systems with real propagation and processing delays, there are significant implementation problems in providing this feedback channel. These problems arise because there will always be a delay experienced in forming and broadcasting this information to the mobiles, and mobiles unaware of the slot status may broadcast in time slots already reserved.

It is an object of the present invention therefore to provide a system wherein this disadvantage is obviated.

According to the present invention we provide a cellular mobile radio system which is arrange to operate in accordance with a package reservation multiple access protocol, wherein at least one time slot in each frame, referred to as an R-slot, is designated for the transmission of access contention data, which time slot includes a field reserved for data specifying a number of information slots, referred to as I-slots, required by a mobile unit, and which system includes a base station adapted for operation such that consequent upon receipt of data in the said reserved field, the base station is arranged to respond by the transmission of acknowledgement data in slots referred to as A-slots which data serves to facilitate the allocation of available slots so as to satisfy the requirement of the mobile unit, characterised in that the position of the R-slots is arranged to be the same in several successive frames.

Preferably the position of the A-slots is arranged also to be the same in several successive frames.

By arranging that the R-slots/A-slots are allowed to vary on a very slow basis, the need for a feedback channel by means of which the position of the R-slots and A-slots are communicated is obviated. Thus, a system is provided wherein feedback on a frame by frame basis to all mobiles in a cell is not required and this represents a considerable practical advantage. This advantage stems from the fact that at low traffic loads, the access delay will be similar to the access delays experienced with high traffic loads, the difference being caused by the traffic generated and the consequential reduction in contention accesses.

It will be appreciated however, that it is in the high traffic load area where capacity gains are achieved. Furthermore, although this will increase the delay that would otherwise be experienced at low load, the transport chain will be designed to accommodate the worse case delay which is occurring at high load. Hence, no loss of performance is implied.

One embodiment of the invention will now be described by way of example only with reference to the accompanying drawing which is a diagram, which represents hardware and processing elements required in a base station of a mobile radio system.

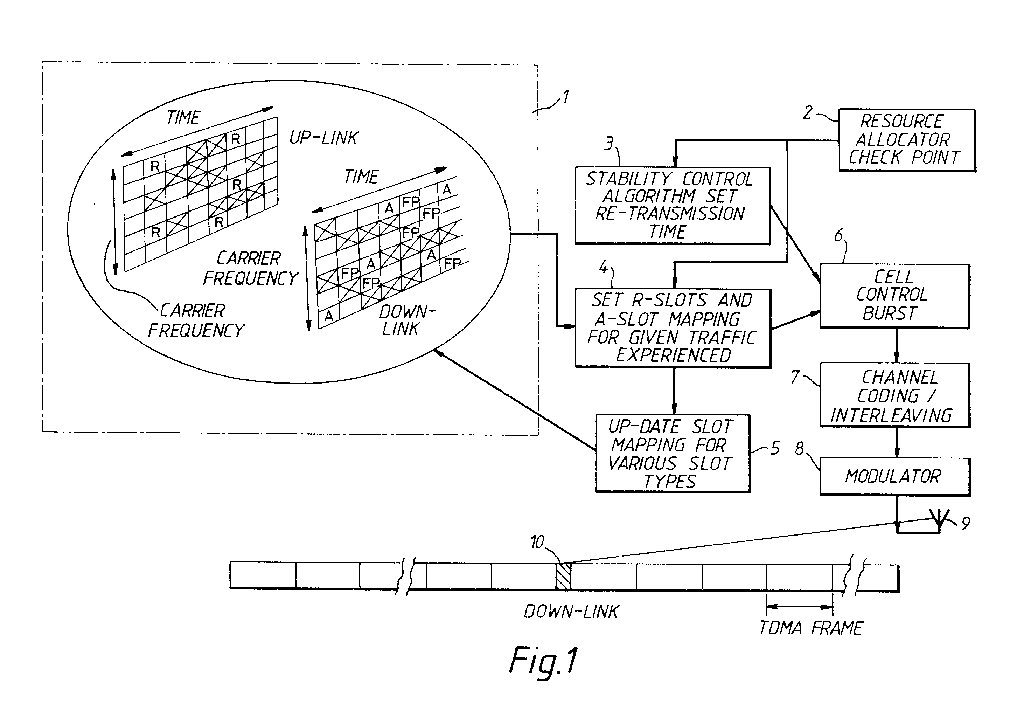

Referring now to the drawing, block 1 is a conceptual area of memory containing a matrix of the mapping of R, (request) FP (fast paging), FP ack (fast paging acknowledgement) and A-slots (acknowledgement) as required as part of the operation of the protocol. The requirement for and function of the FP and FP ack slots is the subject of our co-pending GB Patent Application No 9312005.3 (F20971) to which attention is hereby directed. This matrix contains the mapping of these various slots across the two dimensions of time slots and carrier frequency which are allocated to a particular cell. At a fixed check point, a resource allocator 2 triggers units 3 and 4 to generate a cell control burst. The resource allocator 2 may be arranged to initiate the generation and transmission of the cell control burst for a number of reasons including the requirement to change the number of carriers assigned to a cell. The unit 3 is a stability control device of the protocol and is used to calculate the re-transmission probability used in the access contention process, so as to ensure that the multiple access scheme remains in a stable state. The unit 4 is used to read the slot mapping matrix and hence to form the cell control burst which is generated in a unit 6. The unit 6 which generates the cell control burst is arranged to contain a memory table of the slot mapping matrix shown in block 1 and may or may not contain data appertaining to the re-transmission probabilities and other control information. The unit 6 is arranged to feed a unit 7 which serves to provide error protection and detection coding which may or may not be interleaved because the cell control burst may be transmitted over a number TDMA frames. The cell control burst is then fed from the unit 7 to a modulator 8 which feeds an antenna 9 via suitable RF amplification and frequency changing stages, (not shown). A conceptual form of the down-link carrier is also shown in Figure 1 as a time slot 10 over which the cell control burst is transmitted. Although this time slot 10 is shown to be a single continuous time channel on the TDMA carrier, the cell control burst may be transmitted in a number of ways. It is important however, to appreciate that the cell control burst need only be transmitted once for a number of TDMA frame's and changes which require re-transmission will be required relatively infrequently.

## Claims

1. A cellular mobile radio system which is arrange to operate in accordance with a packet reservation multiple access protocol, wherein at least one time slot in each frame, referred to as an R-slot, is designated for the transmission of access contention data, which time slot includes a field reserved for data specifying a number of information slots, referred to as I-slots, required by a mobile unit, and which system includes a base station adapted for operation such that consequent upon receipt of data in the said reserved field, the base station is arranged to respond by the transmission of acknowledgement data in slots referred to as A-slots which data serves to facilitate the allocation of available slots so as to satisfy the requirement of the mobile unit, characterised in that the position of the R-slots is arranged to be the same in several successive frames.

2. A system as claimed in claim 1, wherein the position of the A-slots is arranged also to be the same in several successive frames.
